# EUROPÄISCHE PATENTSCHRIFT

(11) **EP 1 992 515 B1**
(45) Veröffentlichungstag und Bekanntmachung des Hinweises auf die Patenterteilung: **15.09.2010**
(21) Anmeldenummer: 08009050.9
(22) Anmeldetag: 16.05.2008
(51) Int. Cl.: B60K 35/00

(54) **Multifunktionsanzeige- und Bedienvorrichtung sowie Verfahren zum Betreiben einer Multifunktionsanzeige- und Bedienvorrichtung eines Kraftfahrzeuges**
Multifunctional display and operational device and method for operating a multifunctional display and operational device in a motor vehicle
Dispositif d'affichage polyvalent et de commande ainsi que procédé de fonctionnement d'un dispositif d'affichage polyvalent et de commande d'un véhicule automobile

(30) Priorität: 16.05.2007 DE 102007023292
(43) Veröffentlichungstag der Anmeldung: 19.11.2008
(73) Patentinhaber: VOLKSWAGEN AG, 38436 Wolfsburg (DE)
(72) Erfinder: Wäller, Christoph, 38102 Braunschweig (DE); Thom, Mathias, 38106 Braunschweig (DE); Missal, Markus, 38102 Braunschweig (DE)
(74) Vertreter: Patentanwälte Bressel und Partner

(56) Entgegenhaltungen:
- EP-A- 0 771 686
- EP-A- 1 247 686
- DE-A1- 10 144 752
- DE-A1- 19 961 376

## Beschreibung

Die Erfindung betrifft eine Multifunktionsanzeige- und Bedienvorrichtung eines Kraftfahrzeugs zum Anzeigen von Informationen über Fahrzeugsysteme, Fahrzeugfunktionen und/oder Dienste und zum Bedienen der Fahrzeugsysteme, Fahrzeugfunktionen und/oder Dienste, umfassend eine Anzeigevorrichtung mit einer Anzeigefläche, eine mit der Anzeigevorrichtung verknüpfte Steuereinheit zum Umsetzen einer Benutzerschnittstelle sowie mindestens eine mit der Anzeigevorrichtung gekoppelte Positionserfassungseinheit, mit der eine Betätigung durch ein Betätigungselement, insbesondere ein Körperteil, vorzugsweise einen Finger, eines Nutzers, in Abhängigkeit von einer ermittelten Position des Betätigungselements relativ zu einer Darstellung auf der Anzeigefläche erfassbar ist, sowie ein Verfahren zum Betreiben einer solchen Multifunktionsanzeige- und Bedienvorrichtung eines Kraftfahrzeugs.

In Kraftfahrzeugen werden Multifunktionsanzeige- und Bedienvorrichtungen verwendet, um zum einen Informationen über Fahrzeugsysteme, Fahrzeugfunktionen und fahrzeuginterne oder gegebenenfalls zusätzliche fahrzeugexterne Dienste anzuzeigen. Als fahrzeugexterne Dienste werden solche angesehen, deren Diensterbringung zumindest zum Teil außerhalb des Fahrzeugs liegt. Bei einem solchen Dienst kann es sich beispielsweise um einen auf einem Internetserver ausgeführten Dienst handeln, der über die Multifunktionsanzeige- und Bedienvorrichtung des Kraftfahrzeugs bedienbar ist.

Neben dem Anzeigen von Informationen über die Fahrzeugsysteme, Fahrzeugfunktionen und/oder Dienste wird eine Multifunktionsanzeige- und Bedienvorrichtung somit auch zum Bedienen der Fahrzeugsysteme, Fahrzeugfunktionen und/oder Dienste verwendet. Neben in Hardware ausgebildeten Bedienelementen, beispielsweise Tastschaltern, Drehdrückstellern usw., umfassen einige moderne Multifunktionsanzeige- und Bedienvorrichtungen zusätzlich und/oder alternativ eine Positionserfassungseinheit. Bei der Positionserfassungseinheit kann es sich beispielsweise um eine berührungsempfindliche Einheit handeln, die gemeinsam mit der Anzeigefläche der Anzeigevorrichtung so ausgebildet ist, dass diese einen so genannten Touchscreen bilden. Bei einem solchen Touchscreen kann eine Berührposition auf der Anzeigefläche erfasst werden. Einzelnen Positionen der Anzeigefläche oder Gebieten oder Bereichen der Anzeigefläche können Bediensignale zugeordnet sein, die bei einer Berührung an der entsprechenden Position oder in dem entsprechenden Gebiet oder Bereich erzeugt werden und zur Bedienung der Fahrzeugsysteme, Fahrzeugfunktionen und/oder Dienste verwendet werden. Bediensignale umfassen in diesem Zusammenhang sowohl elektrische, optische Signale als auch digitalisierte Befehle und/oder Informationen, über die ein Ablauf eines softwaregesteuerten Programms oder einer elektronischen Vorrichtung usw. beeinflusst werden.

Bei den bekannten Multifunktionsanzeige- und Bedienvorrichtungen werden Benutzerschnittstellen, die eine Interaktion des Nutzers mit den Fahrzeugsystemen, Fahrzeugfunktionen und/oder Diensten ermöglichen, verwendet, bei denen die einzelnen Bedienoptionen kontextabhängig zusammengefasst sind. Ein Bedienkontext umfasst beispielsweise alle Bedienoptionen, die die Bedienung einer Fahrzeugfunktion, eines Fahrzeugsystems und/oder eines Dienstes oder eines funktionalen Bereichs betreffen oder zusammengehören. Den einzelnen Bedienoptionen sind auf der Anzeigefläche so genannte virtuelle Bedienelemente zugeordnet, denen wiederum Bediensignale zugeordnet sind, die zum Auslösen der entsprechenden Bedienoption verwendet werden. Wird die Position eines Betätigungselements, insbesondere eines Fingers eines Nutzers, an einer Position relativ zu einem Darstellungsbereich einer Bedienoption erfasst, so wird die entsprechende Bedienoption ausgelöst. Bei einer als Touchscreen ausgebildeten Anzeigevorrichtung wird somit eine Bedienoption über eine Berührung eines entsprechenden virtuellen Bedienelements ausgelöst. Es ergibt sich, dass eine korrekte Betätigung in Bedienkontexten erschwert wird, die eine Vielzahl von Bedienoptionen umfassen.

Aus der gattungsgemäßen EP 1 247 686 A2 sind ein Verfahren und eine Vorrichtung zur Auswahl von Fahrzeugfunktionen in einem Kraftfahrzeug bekannt, bei welchen den Funktionen zugeordnete Auswahlinformationen in einer im Wesentlichen hierarchischen Menüstruktur angeordnet werden. Die im Wesentlichen hierarchische Menüstruktur wird zur Auffindung zumindest einer Auswahlinformation durch einen Benutzer durchlaufen und aus der Im Wesentlichen hierarchischen Menüstruktur zumindest eine Auswahlinformation durch den Benutzer ausgewählt. Anschließen wird die der zumindest einen Auswahlinformation zugeordnete Fahrzeugfunktion durch die Benutzerwahl aktiviert. Eine Komfortsteigerung wird dadurch erreicht, dass die zumindest eine Auswahlinformation in Abhängigkeit einer Fahrsituation in einer obersten Menüebene der im Wesentlichen hierarchischen Menüstruktur angeordnet wird und die zumindest eine in der obersten Menüebene angeordnete Auswahlinformation durch den Benutzer direkt auswählbar wird.

Der Erfindung liegt somit die Aufgabe zugrunde, eine Multifunktionsanzeige- und Bedienvorrichtung sowie ein Verfahren zum Betreiben einer solchen Multifunktionsanzeige- und Bedienvorrichtung zu schaffen, mit denen eine verbesserte Bedienung von Fahrzeugsystemen, Fahrzeugfunktionen und/oder Diensten insbesondere während der Fahrt des Kraftfahrzeugs möglich ist.

Die technische Aufgabe wird erfindungsgemäß durch eine Multifunktionsanzeige- und Bedienvorrichtung mit den Merkmalen des Patentanspruchs 1 sowie ein Verfahren zum Betreiben einer solchen Multifunktionsanzeige- und Bedienvorrichtung mit den Merkmalen des Patentanspruchs 8 gelöst. Vorteilhafte Ausgestaltungen der Erfindung ergeben sich aus den Unteransprüchen.

Der Erfindung liegt der Gedanke zugrunde, dass abhängig von einem Zustand des Kraftfahrzeugs, der Fahrzeugsysteme, der Fahrzeugfunktionen und/oder der Dienste nur bestimmte Bedienoptionen aller möglichen Bedienoptionen zur Verfügung stehen und in einem Bedienmodus daher jeweils nur den verfügbaren Bedienoptionen zugeordnete Bedienelemente angezeigt werden, wobei die Darstellung der verfügbaren Bedienoptionen so erfolgt, dass eine möglichst optimale Betätigungssicherheit für eine Betätigungshandlung mit dem Betätigungselement erreicht wird. Die einzelnen Fahrzeugsysteme, Fahrzeugfunktionen und/oder Dienste weisen in unterschiedlichen Zuständen des Kraftfahrzeugs und/oder unterschiedlichen Zuständen der Fahrzeugsysteme, Fahrzeugfunktionen und/oder Dienste unterschiedliche Bedienmöglichkeiten, die als Bedienoptionen bezeichnet sind, auf. Beispielsweise können einzelne Fahrzeugsysteme nur bei eingeschalteter Zündung bedient werden. Einige Fahrzeugfunktionen können beispielsweise von einem Fahrzustand abhängen. Dadurch, dass abhängig vom Zustand des Kraftfahrzeugs, der Fahrzeugsysteme, der Fahrzeugfunktionen und/oder Dienste jeweils nur zur Verfügung stehende Bedienoptionen aller möglichen Bedienoptionen angezeigt werden und die Darstellung der Informationen so erfolgt, dass eine möglichst optimale Betätigungssicherheit für Betätigungshandlungen mit dem Betätigungselement erreicht wird, wird die Wahrscheinlichkeit für eine Fehlbedienung reduziert. Dieses führt dazu, dass insgesamt die Fahrsicherheit gesteigert wird, da die Zeit, die ein Nutzer, der das Fahrzeug lenkt, für ein Ausführen einer Bedienoption benötigt und daher vom Straßenverkehr abgelenkt ist, reduziert wird. Indem Bedienoptionen, die aktuell nicht zur Verfügung stehen, nicht mehr angezeigt werden, besteht nicht die Gefahr, dass der Nutzer versucht, diese durch eine Betätigungshandlung auszulösen. Selbst wenn bei einer Betätigung eines Bedienelements einer aktuell nicht verfügbaren Bedienoption bei einer Vorrichtung nach dem Stand der Technik kein Bediensignal erzeugt wird, so erschwert dieses dennoch eine Bedienung durch einen Nutzer ungemein. Dem Nutzer muss im Stand der Technik nämlich vermittelt werden, dass die von ihm gewählte Bedienoption derzeit nicht ausführbar ist. Dieses kann akustisch, optisch oder auf beliebige andere Weise erfolgen, stört jedoch in jedem Falle einen zügigen Bedienungsablauf. Dadurch, dass erfindungsgemäß nur die tatsächlich verfügbaren Bedienoptionen dargestellt werden, ist es für einen Nutzer darüber hinaus einfacher, sich in einer aktuellen Bediensituation über die verfügbaren Möglichkeiten zu orientieren. Eine Erfassung der möglichen Bedienoptionen wird somit beschleunigt. Dieses führt wiederum dazu, dass die gesamte Bedienung beschleunigt wird.

Die Erfindung sieht daher vor, dass die Steuereinheit ausgebildet ist, abhängig von einem Zustand des Kraftfahrzeugs, der Fahrzeugsysteme, der Fahrzeugfunktionen und/oder der Dienste diejenigen aktuell zur Verfügung stehenden aller möglichen Bedienoptionen zu ermitteln. Eine solche Ermittlung kann beispielsweise darüber erfolgen, dass die Steuereinheit Statusinformationen des Kraftfahrzeugs, der Fahrzeugfunktion, des Fahrzeugsystems und/oder Dienstes abfragt und/oder auswertet und hieran erkennt, welche Bedienoptionen aus einer Auswahl möglicher Bedienoptionen in dem jeweiligen Bedienkontext auch tatsächlich zur Verfügung stehen. Beispielsweise können den Bedienoptionen eines Bedienkontexts in einer Tabelle, beispielsweise einer Datenbanktabelle, Statuskennungen zugeordnet sein, die eine Zuordnung einer Bedienoption zu einem Status des Fahrzeugs, der Fahrzeugfunktion, des Fahrzeugsystems und/oder Dienstes ermöglicht. Die Ausgestaltung kann so gewählt werden, dass jeweils nur die Bedienoptionen angezeigt werden, deren Kennung mit den tatsächlich ermittelten Statusinformationen übereinstimmen. Es sind weitere Möglichkeiten denkbar, wie eine aktive Ermittlung der zur Verfügung stehenden Bedienoptionen ausgeführt werden kann. Beispielsweise können die einzelnen Fahrzeugsysteme, Fahrzeugfunktionen und/oder Dienste jeweils die Bedienoptionen angeben oder kennzeichnen, die aktuell verfügbar sind. Alternativ ist es möglich, dass die einzelnen Fahrzeugsysteme, Fahrzeugfunktionen und/oder Dienste jeweils die nicht verfügbaren Bedienoptionen angeben und/oder kennzeichnen und die Steuereinheit anhand dieser Informationen in Umkehrschluss die verfügbaren Bedienoptionen erkennt.

Gemäß einer Alternative der Erfindung ist vorgesehen, dass die zur Verfügung stehenden Bedienoptionen mittels virtueller Bedienelemente dargestellt sind, die jeweils über einen gesamten für Bedienelemente zur Verfügung stehenden Bereich der Anzeigefläche gleichmäßig verteilt sind. Eine gleichmäßige Verteilung bietet den Vorteil, dass hierdurch eine Orientierung des Nutzers erleichtert wird.

Gemäß einer anderen Alternative der Erfindung sind die virtuellen Bedienelemente der zur Verfügung stehenden Bedienoptionen in dem einen Bedienmodus jeweils so dargestellt, dass sie entlang einer ausgezeichneten Richtung, insbesondere parallel zu einer Längsseite der Anzeigefläche, eine gleiche Ausdehnung aufweisen. Ein Vorsehen von Bedienelementen, die eine gleiche Ausdehnung entlang einer ausgezeichneten Richtung aufweisen, sorgt dafür, dass die Ansicht der Benutzerschnittstelle übersichtlich für den Benutzer ist. Hierdurch wird die Orientierung und Bedienbarkeit für den Nutzer gesteigert.

Bei einer weiteren Ausführungsform ist vorgesehen, dass die virtuellen Bedienelemente der zur Verfügung stehenden Bedienoptionen in dem einen Bedienmodus jeweils so dargestellt sind, dass ihnen flächig jeweils ein gleich großer Teilbereich des gesamten für Bedienelemente zur Verfügung stehenden Bereichs der Anzeigefläche zugewiesen ist. Hierbei muss ein Bedienelement nicht zwangsläufig den gesamten ihm zugewiesenen Teilbereich als Darstellungsfläche nutzen. Vorteilhaft ist es jedoch, die Teilbereiche als Auslösungsbereiche zu verwenden. Dies bedeutet, dass bei einer als Touchscreen ausgebildeten Anzeigevorrichtung die Teilbereiche jene Bereiche sind, denen die Bediensignale zugeordnet sind, die bei einem Berühren des Teilbereichs die Bedienoption auslösen, die mittels des virtuellen Bedienelements innerhalb des Teilbereichs dargestellt ist. Hierbei ist zu beachten, dass bei einigen Ausführungsformen vorgesehen sein kann, dass nicht die gesamte Anzeigefläche der Anzeigevorrichtung zum Darstellen von Bedienoptionen verwendet wird. Häufig ist es wünschenswert und vorteilhaft, einen bestimmten Bereich der Anzeigefläche zum Darstellen von Statusinformationen zu reservieren. Diese können beispielsweise eine Uhrzeit, aktuelle Einstellungen einer Klimaanlage, Lautstärkeeinstellungen, einen aktuell ausgewählten Rundfunksender usw. umfassen. Da diese Informationen auch in einer Bediensituation dem Nutzer zur Verfügung gestellt werden sollen, ist daher in solchen Ausführungsformen der für Bedienelemente zur Verfügung stehende Bereich kleiner als der Gesamtbereich der Anzeigefläche.

Bei einer besonders bevorzugten Ausführungsform der Erfindung ist vorgesehen, dass die virtuellen Bedienelemente der zur Verfügung stehenden Bedienoptionen in dem einen Bedienmodus jeweils so dargestellt sind, dass eine Summe ihrer Darstellungsflächen mindestens 75 %, vorzugsweise 90 %, am bevorzugtesten 100 % des gesamten für Bedienelemente zur Verfügung stehenden Bereichs überdecken. Bei einer solchen Ausführungsform sind die Bedienelemente groß dargestellt. Auch wenn klein dargestellten Bedienelementen größere Auslösebereiche zugeordnet sein können, so ist dies grafisch für den Nutzer in der Regel nicht erkennbar. Daher ist es vorteilhaft, die virtuellen Bedienelemente so groß wie möglich darzustellen.

Bei einer besonders bevorzugten Ausführungsform der Erfindung ist vorgesehen, dass die Darstellungspositionen und/oder Darstellungsgrößen und/oder Auslösebereichsgrößen der zur Verfügung stehenden Bedienoptionen in dem einen Bedienmodus in Abhängigkeit von der Anzahl der im jeweiligen Bedienkontext zur Verfügung stehenden Bedienoptionen angepasst sind. Dies bedeutet, dass die Bedienelemente, die einzelnen Bedienoptionen zugeordnet sind, in einem Bedienkontext nicht jeweils an derselben Stelle und in derselben Größe dargestellt werden. Vielmehr ist die Darstellungsposition und/oder die Darstellungsgröße und/oder ein dem Bedienelement zugeordneter Auslösebereich von der Gesamtanzahl der zur Verfügung stehenden Bedienoptionen in dem jeweiligen Bedienkontext abhängig. Ist zustandsbedingt nur eine geringe Anzahl von Bedienoptionen verfügbar, so werden die Bedienelemente beispielsweise vergrößert so dargestellt, dass Mittelpunkte ihrer Darstellungsbereiche möglichst weit voneinander auf der Anzeigefläche in dem für Bedienoptionen zur Verfügung stehenden Darstellungsbereich beabstandet sind.

Als besonders vorteilhaft hat sich eine Ausführungsform herausgestellt, bei der Anschlüsse für mit dem Kraftfahrzeug lösbar koppelbare Geräte vorgesehen sind, die mit einer Anschlussbelegungsüberwachung ausgestattet sind. Beispielsweise kann die Multifunktionsanzeige- und Bedienvorrichtung so ausgebildet sein, dass in diese ein Radio und/oder ein CD-Player und/oder ein DVD-Player und/oder ein interner MP3-Player integriert sind. Zusätzlich möchte ein Fahrer heutzutage jedoch häufig auch ein Mobiltelefon und/oder einen externen Media-Player, beispielsweise einen MP3-Player, an das fahrzeuginterne Multimediasystem, insbesondere an das Audiosystem, anschließen. Die hierfür vorgesehenen Anschlüsse werden bei der bevorzugten Ausführungsform dahingehend überwacht, ob ein entsprechendes Gerät über sie mit der Multifunktionsanzeige- und Bedienvorrichtung verbunden ist. Je nach dem, ob der eine oder die mehreren Anschlüsse zum Anschließen eines oder mehrerer Geräte verwendet sind, werden in einem Bedienkontext, in dem beispielsweise eine Multimediaquelle ausgewählt wird, eine entsprechende Anzahl verfügbarer Quellen angezeigt. Ist keiner der Anschlüsse belegt, so werden nur die integriert in die Multifunktionsanzeige- und Bedienvorrichtung oder anderweitig intern im Kraftfahrzeug vorgesehenen Multimediaquellen als Bedienoptionen angezeigt. Ist jedoch beispielsweise zusätzlich ein Handy angeschlossen, so wird auch dieses als Audioquelle in dem Bedienkontext "Auswählen einer Multimediaquelle" angezeigt. Die Bedienelemente für die fahrzeuginterne Multimediaquelle werden somit entsprechend angepasst, so dass möglichst alle Bedienelemente der verfügbaren Audioquellen eine gleich große Darstellungsfläche aufweisen und möglichst gleich verteilt den gesamten für Bedienelemente zur Verfügung stehenden Anzeigebereich der Anzeigefläche überdecken.

Bei einer bevorzugten Ausführungsform ist die Positionserfassungseinheit mit der Anzeigevorrichtung als Touchscreen ausgebildet.

Bei einer anderen vorteilhaften Ausführungsform ist die Multifunktionsanzeige- und Bedienvorrichtung zusätzlich oder alternativ mit einer berührungslos wirkenden Positionserfassungseinheit gekoppelt. Solche berührungslos wirkenden Positionserfassungseinheiten sind in der Lage, eine Position des Betätigungselements dreidimensional im Raum vor der Anzeigefläche der Anzeigevorrichtung zu erfassen. Wird eine solche Positionserfassungseinheit verwendet, so hat es sich als vorteilhaft erwiesen, den Darstellungsbereichen der Bedienoptionen Auslösevolumina, die als Betätigungsbereiche bezeichnet werden, zuzuordnen, deren Aufgabe und Funktionsweise denen der oben beschriebenen Auslösebereiche für eine Positionserfassungseinheit entsprechen, die eine Position einer Berührung der Anzeigefläche ermitteln. Verweilt ein Betätigungselement eine vorgegebene Zeitspanne in dem Betätigungsbereich, so kann diese als Betätigungshandlung zum Auslösen der entsprechenden Bedienoption aufgefasst werden und ein zugeordnetes Bediensignal erzeugt und verwendet werden.

Dem Fachmann sind verschiedene Ausgestaltungen für berührungslos messende Positionsbestimmungseinheiten bekannt. Eine solche berührungslos messende Positionserfassungseinheit kann beispielsweise mittels einer Übertragung von Hochfrequenzsignalen über die Nutzer arbeiten, wie dieses beispielsweise in der WO 2004/078536 beschrieben ist. Alternativ können kamerabasierende, ultraschallbasierende oder auf optischen Sensoren basierende Sensoreinheiten von der Positionserfassungseinheit verwendet werden.

Solche Sensoreinheiten, die ein optisches Verfahren verwenden, können beispielsweise gemäß folgendem Prinzip ausgestaltet sein. Eine Sende-LED strahlt ein rechteckförmig amplitudenmoduliertes Lichtsignal im optischen oder infraroten Wellenlängenbereich ab. Das an einem Objekt, beispielsweise dem als Körperteil ausgebildeten Betätigungselement, reflektierte Lichtsignal wird von einer Fotodiode erfasst. Von einer Kompensations-LED wird ein um 180° phasenversetztes, ebenfalls rechteckförmig amplitudenmoduliertes Referenzlichtsignal zu der Fotodiode über einen unveränderlichen und störungsfreien Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Fotodiode aufheben und ein Gleichsignal detektiert wird. Eine Änderung des Regelsignals ist ein Maß für einen Abstand des Objekts, d.h. des Betätigungselements. Eine nach diesem Prinzip ausgestaltete Sensoreinheit ist weitgehend unabhängig von Temperatur und Helligkeitsschwankungen. Werden mehrere solcher Sensoreinheiten beabstandet zueinander angeordnet, so kann über eine Triangulation die Position des Körperteils im Raum dreidimensional bestimmt werden.

Zur Überwachung der Belegung ist es vorteilhaft, Statusinformationen mit dem koppelbaren Gerät auszutauschen, die mindestens eine Bedienoption bei der Darstellung in den Bedienmodus beeinflussen, insbesondere, indem diese ausgetauschten Statusinformationen zumindest teilweise dargestellt werden.

Die Erfindung wird nachfolgend anhand bevorzugter Ausführungsbeispiele näher erläutert. Hierbei zeigen:
- Fig. 1: eine schematische Darstellung eines Kraftfahrzeugs mit einer Multifunktionsanzeige- und Bedienvorrichtung;
- Fig. 2 - 5: schematische Ansichten einer Anzeigefläche in einem Bedienmodus einer Multifunktionsanzeige- und Bedienvorrichtung;
- Fig. 6, 7: schematische Darstellungen eines Raumbereichs vor einer Multifunktionsanzeige- und Bedienvorrichtung zur Veranschaulichung eines Aktivierungs- und eines Betätigungsbereichs.

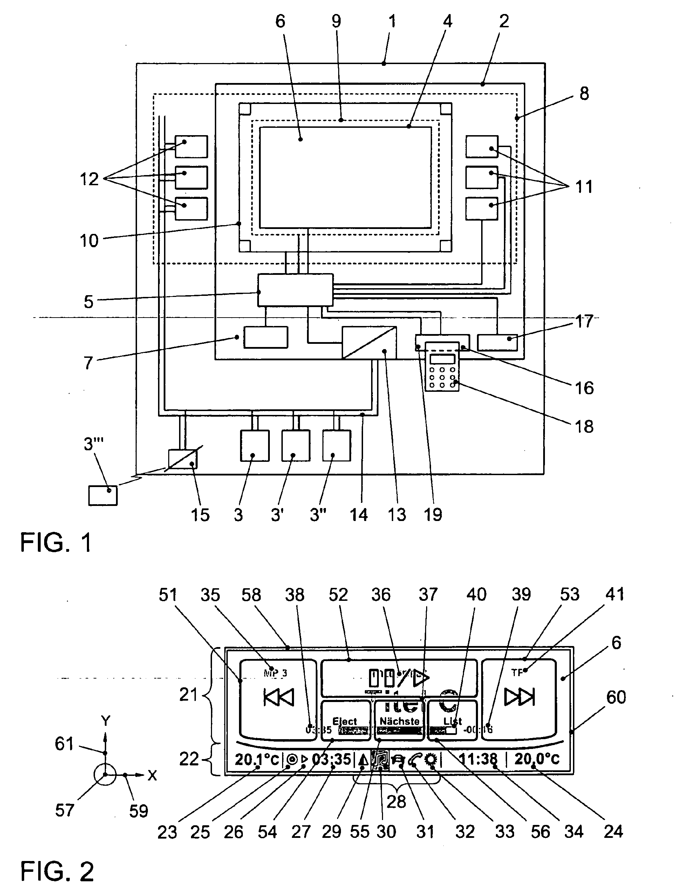

In Fig. 1 ist schematisch ein Kraftfahrzeug 1 dargestellt. Das Kraftfahrzeug 1 umfasst eine Multifunktionsanzeige- und Bedienvorrichtung 2. Die Multifunktionsanzeige- und Bedienvorrichtung 2 in dem Kraftfahrzeug 1 dient zum einen zum Vermitteln von Informationen an einen Nutzer und zum anderen zum Bedienen von in die Multifunktionsanzeige- und Bedienvorrichtung 2 integrierten Funktionen und/oder weiteren Fahrzeugsystemen 3, Fahrzeugfunktionen 3' und/oder fahrzeuginternen Diensten 3" und/oder fahrzeugexternen Diensten 3'''.

Die Multifunktionsanzeige- und Bedienvorrichtung 2 umfasst hierfür eine Anzeigevorrichtung 4. Die Anzeigevorrichtung 4 ist mit einer Steuereinheit 5 gekoppelt, die die Darstellung von Informationen auf der Anzeigevorrichtung 4 steuert. Die Anzeigevorrichtung 4 ist beispielsweise als LCD-Anzeige, als Plasmaanzeige oder Ähnliches ausgestaltet. Sie umfasst eine frei programmierbare Anzeigefläche 6.

Die Steuereinheit 5 ist mit einer Speichervorrichtung 7 gekoppelt, in der ein Programmcode abgelegt ist, der im Zusammenwirken mit der Steuereinheit 5, welche vorzugsweise als Rechnereinheit ausgebildet ist, eine Umsetzung einer Benutzerschnittstelle bewirkt. In der Speichervorrichtung 7 sind zusätzlich vorteilhafterweise die notwendigen Informationen abgelegt, um die an den Nutzer zu vermittelnden Informationen grafisch darzustellen. Dies bedeutet, dass die notwendigen Informationen für eine grafische Ausgestaltung von Bedienelementen in der Speichervorrichtung 7 abgelegt sind.

Um Nutzereingaben erfassen zu können, ist eine Erfassungseinheit 8 vorgesehen. Die Erfassungseinheit 8 umfasst zum einen eine berührungsempfindliche Positionserfassungseinheit 9, die mit der Anzeigevorrichtung 4 gemeinsam als Touchscreen ausgebildet ist. Zusätzlich umfasst die Erfassungseinheit 8 eine berührungslos messende Positionserfassungseinheit, die im Folgenden als Positionsbestimmungseinheit 10 zur besseren Unterscheidung von der berührungsempfindlichen Positionserfassungseinheit 9 bezeichnet ist. Mit der Positionsbestimmungseinheit 10 kann eine Position eines Betätigungselements, insbesondere eines Körperteils, vorzugsweise eines Fingers, eines Nutzers, im Raum zumindest vor der Anzeigefläche 6 ermittelt werden. Solche berührungslos messenden Positionsbestimmungseinheiten sind dem Fachmann, wie oben bereits ausgeführt ist, bekannt.

Bei der beschriebenen Ausführungsform kann eine Betätigungshandlung sowohl mit der berührungsempfindlichen Positionserfassungseinheit 9, die mit der Anzeigevorrichtung 4 als Touchscreen ausgebildet ist, als auch mittels der berührungslos messenden Positionsbestimmungseinheit 10 erfasst werden. Zusätzlich umfasst die Erfassungseinheit 8 Bedienelemente 11, die benachbart zu der Anzeigevorrichtung 4 angeordnet sind. Diese können beispielsweise als Tasten, Drehdrücksteller usw. ausgebildet sein. Zusätzlich kann die Erfassungseinheit 8 weitere Bedienelemente 12 umfassen, die über eine Schnittstelle 13 der Multifunktionsanzeige- und Bedienvorrichtung 2 und einen Datenbus 14 mit der Steuereinheit 5 gekoppelt sind. Über die Bedienelemente 11 und die weiteren Bedienelemente 12 können somit auch Betätigungshandlungen erfasst werden. Über den Datenbus 14 sind ebenfalls die mittels der Multifunktionsanzeige- und Bedienvorrichtung 2 bedienbaren Fahrzeugsysteme 3, Fahrzeugfunktionen 3', fahrzeuginternen Dienste 3" sowie fahrzeuginternen Dienste 3''' verknüpft. Letztere sind hierbei über eine weitere Schnittstelle 15 mit dem Kraftfahrzeug verknüpft.

Die Multifunktionsanzeige- und Bedienvorrichtung 2 umfasst ferner Anschlüsse 16, 17. Diese sind vorgesehen, um tragbare Vorrichtungen oder Gerät lösbar kommunikationstechnisch mit der Multifunktionsanzeige- und Bedienvorrichtung 2 zu verbinden. In dem dargestellten Ausführungsbeispiel ist ein Mobiltelefon 18 mit dem Anschluss 16 lösbar verbunden. An dem Anschluss 16 ist eine Anschlussüberwachungseinrichtung 19 angeordnet. Die Anschlussüberwachungseinrichtung 19 ist so ausgebildet, dass sie erkennt, ob eine tragbare Vorrichtung, d.h. ein lösbar koppelbares Gerät, hier das Mobiltelefon 18, mit dem Anschluss 16 verbunden ist. Diese Information wird an die Steuereinheit 5 weitergegeben. Die Anschlussüberwachungseinrichtung 19 kann beispielsweise als mechanischer Schalter ausgebildet sein, der bei einem Verbinden des Mobiltelefons 19 mit dem Anschluss 16 betätigt wird und beispielsweise geschlossen wird. Eine elektronische Abfrage über den Schaltzustand liefert somit eine Information, ob der Anschluss 16 belegt ist oder nicht.

Eine Anschlussbelegungsüberwachung kann darüber hinaus zusätzlich oder alternativ über einen Austausch von ersten Daten, die hier als Statusdaten bezeichnet werden, zwischen der Steuereinheit und dem tragbaren, über einen der Anschlüsse 16, 17 verbundenen Gerät erfolgen. Die Anschlüsse 16, 17 können sowohl als mechanische als auch als kommunikationstechnische Schnittstellen aufgefasst werden. Diese können unterschiedlich ausgebildet sein. Je nach Ausprägung der Schnittstelle werden beim kommunikationstechnischen Verbinden, welches ein physikalisches Verbinden umfassen kann, Daten zwischen der Steuereinheit 5 und dem tragbaren Gerät ausgetauscht. Diese ermöglichen es häufig, das tragbare Gerät zu identifizieren. Die Anschlüsse 16, 17 können auch als drahtlose Schnittstellen oder berührungslose Schnittstellen ausgebildet sein. Beispielsweise ist ein kommunikationstechnisches Verbinden mit der Multifunktionsanzeige- und Bedienvorrichtung 2 über eine Funkschnittstelle, eine Infrarotschnittstelle usw. möglich.

Die beschriebene Multifunktionsanzeige- und Bedienvorrichtung 2 ist so ausgestaltet, dass mittels der Steuereinheit 5 und einem in der Speichervorrichtung 7 abgelegten Programmcode eine Benutzerschnittstelle umgesetzt ist. In Fig. 2 ist eine Ansicht der Anzeigefläche 6 in einem Bedienmodus der Benutzerschnittstelle schematisch dargestellt. Die Anzeigefläche 6 umfasst in einem oberen Bereich einen so genannten Kontextinformationsbereich 21 und in einem unteren Bereich einen Statusinformationsbereich 22. In dem Kontextinformationsbereich 21 sind Informationen eines Bedienkontextes, hier eines Audiobedienkontextes, grafisch dargestellt. Im dem Statusinformationsbereich 22 sind kontextübergreifende Informationen dargestellt. Am linken unteren Rand 23 und am rechten unteren Rand 24 des Statusinformationsbereichs 22 sind jeweils Temperaturangaben dargestellt. Die Temperaturangaben geben jeweils eine gewünschte Temperatur in der ihrer Anzeigeposition entsprechenden Fahrzeughälfte wieder. Dies bedeutet, dass auf der linken Fahrzeugseite eine Temperatur von 21 °C und auf der rechten Seite des Fahrzeugs eine Temperatur von 20°C im Innenraum des Kraftfahrzeugs vorherrschen sollen. Ein aktuelles Quellensymbol 25 gibt eine aktuell ausgewählte Schallquelle an. Im dargestellten Beispiel ist die Schallquelle eine CD. Ein Dreieck 26 deutet an, dass gegenwärtig ein Titel wiedergegeben wird. Eine Wiedergabezeitangabe 27 gibt eine bereits verstrichene Abspieldauer des gegenwärtig wiedergegebenen Titels an. Ebenso gut könnte eine Restspieldauer des wiedergegebenen Titels, eine Gesamtabspieldauer der CD oder einer als Playliste bezeichneten Wiedergabeliste usw. angegeben sein. In der Mitte des Statusinformationsbereichs 22 befindet sich ein so genanntes Kontextkennungsfeld 28, in dem unterschiedliche Anzeige- und Bedienkontexte jeweils mittels einer symbolhaft ausgestalteten Kontextkennung dargestellt sind. Die Kontextkennungen umfassen von links nach rechts eine Kontextkennung Navigation 29, eine Kontextkennung Audio 30, eine Kontextkennung Fahrzeug 31, eine Kontextkennung Telefon 32 und eine Kontextkennung Allgemein 33. Die aktuell ausgewählte Kontextkennung Audio 30 ist visuell hervorgehoben. In dem Kontextinformationsbereich 22 ist zusätzlich eine Uhrzeitangabe 34 dargestellt. Ebenso könnte ein aktuell ausgewählter Rundfunksender dargestellt sein, der im Hintergrund auf aktuelle Verkehrsinformationen überwacht wird. Die im Statusinformationsbereich 22 dargestellten Statusinformationen zeichnen sich dadurch aus, dass sie in unterschiedlichen Anzeige- und Bedienkontexten im Statusinformationsbereich 22 angezeigt werden.

In dem Kontextinformationsbereich 21 werden die zu der aktuellen Kontextkennung Audio 30 korrespondierenden Informationen dargestellt. Im Hintergrund und grau dargestellt sind Informationen eines Anzeigekontextes, in dem keine Bedienelemente auf der Anzeigefläche 6 dargestellt sind. Diese Informationen des Anzeigekontextes sind in dem hier dargestellten Bedienkontext im Hintergrund dargestellt. Diese Informationen umfassen in einer oberen linken Ecke eine alphanumerische Angabe 35 über die wiedergegebene Schallquelle. Ferner sind ein Interpret 36, ein Titel 37, eine bereits vergangene Abspieldauer 38 und eine verbleibende Abspieldauer 39 eines aktuell wiedergegebenen Lieds angegeben. Die Abspieldauer im Verhältnis zu einer Gesamtwiedergabedauer ist ebenfalls in einem Verlaufsdiagramm 40 grafisch dargestellt. In einer oberen rechten Ecke ist mittels einer weiteren alphanumerischen Angabe 41 angezeigt, dass ein so genannter "Traffic Pilot" aktiv ist. Dies bedeutet, dass im Hintergrund ein Verkehrsfunksender hinsichtlich einer Ausstrahlung von Verkehrsmeldungen überwacht wird.

In dem Bedienmodus sind im Vordergrund virtuelle Bedienelemente 51 - 56 transparent dargestellt. Die transparente Ausgestaltung ermöglicht es, dass die Informationen des zugehörigen Anzeigekontextes weiterhin wahrgenommen werden. Dargestellt werden nur die Bedienoptionen, die in dem aktuellen Bedienkontext auch tatsächlich verfügbar sind. Der Bedienoption "Rücksprung zum vorherigen Titel" ist ein als Rücksprungtaste ausgebildetes Bedienelement 51 zugeordnet. Ein als Wiedergabe-/Pausetaste ausgebildetes Bedienelement 52 ist einer Pausefunktion zugewiesen. Einer Bedienoption "nächster Titel" ist ein als Vorsprungtaste ausgebildetes Bedienelement 53 zugeordnet. Einer CD-Auswurffunktion ist ein als Auswurftaste (Eject) ausgebildetes Bedienelement 54 zugeordnet. Die dargestellte Multifunktionsanzeige- und Bedienvorrichtung umfasst einen integrierten CD-Wechsler. In dem in Fig. 2 dargestellten Zustand des CD-Wechslers sind mindestens 2 CDs in dem CD-Wechsler vorhanden. Daher ist einer Funktion "Auswählen der nächsten CD" ein Bedienelement 55 zugeordnet. Schließlich kann als weitere Bedienoption ein Anzeigen einer Liste der aktuellen Titel der aktuell wiedergegebenen CD über ein Betätigen eines Listenanzeigebedienelements 56 ausgewählt werden.

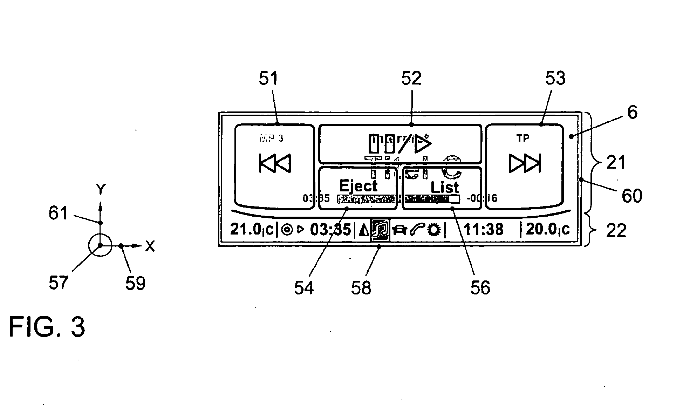

Wird die eine CD mittels eines Betätigens des als Auswurftaste ausgebildeten Bedienelements 54 ausgeworfen, so steht die Bedienoption "nächste CD" nicht mehr zur Verfügung. Folglich ändert sich die Ansicht der Anzeigefläche zu der in Fig. 3 dargestellten Ansicht. Der Teilbereich der Anzeigefläche der ursprünglichen Bedienelementen 54, 55 und 56, die als Auswurftaste, nächste CD und Listenauswahltaste ausgebildet sind, wird bei der neuen Ansicht nach Fig. 3 ausschließlich durch die als Auswurftaste und als Listenauswahltaste ausgebildeten Bedienelemente 54 und 56 eingenommen. Dies bedeutet, dass diese sowohl ihre Position, die jeweils mit einer Mitte ihres Darstellungsbereichs assoziiert ist, als auch ihre Größe relativ zu den übrigen Bedienelementen verändert haben. Hierüber wird zum einen eine Orientierung über die verfügbaren Bedienoptionen verbessert, zum andern wird auch eine Bediensicherheit dadurch gesteigert, dass die als Auswurftaste und als Listenauswahltaste ausgebildeten Bedienelemente 54, 56 grafisch größer dargestellt sind, so dass ein Auslösen über ein Berühren der als Touchscreen ausgebildeten Anzeigefläche in dem entsprechenden Darstellungsbereich der Bedienelemente 54, 56 einfacher möglich ist. Die Zielgenauigkeit, die ein Nutzer aufbringen muss, um diese beiden Bedienelemente 54, 56 zu treffen, kann "herabgesenkt" werden. Bei einer Fahrt über einen unebenen Untergrund, bei dem eine Rüttelbewegung des Fahrzeugs auf den Fahrer übertragen wird, ist somit eine höhere Wahrscheinlichkeit gegeben, dass der Fahrer bei einem Betätigungswunsch einer dieser beiden Bedienoptionen auch tatsächlich die richtige Bedienoption auslöst.

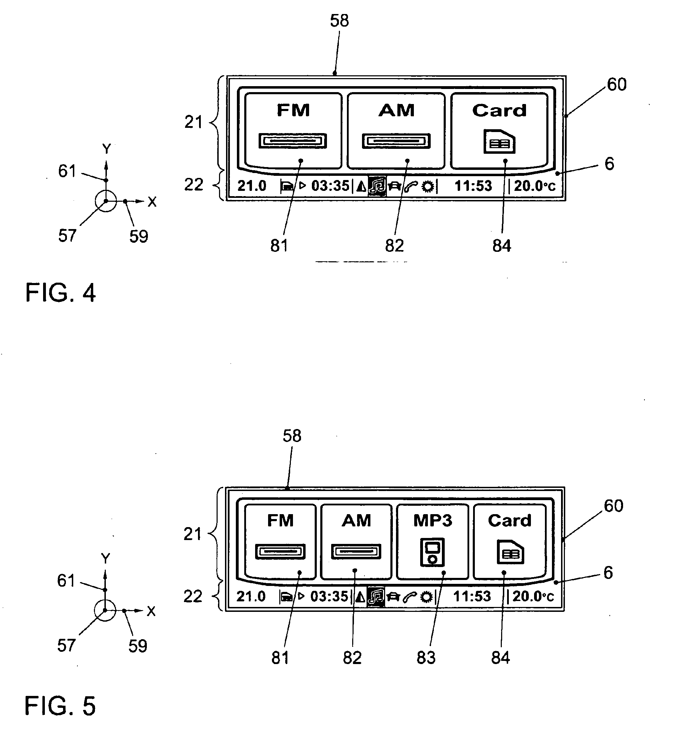

In Fig. 4 und 5 sind zwei weitere Ansichten in einem Bedienmodus gezeigt. Bei dieser Ausführungsform der Benutzerschnittstelle kann in dem aktuellen Kontext jeweils eine Audioquelle ausgewählt werden. Hierbei ist jeder verfügbaren Audioquelle jeweils ein virtuelles Bedienelement 81 - 84 zugeordnet. Diese virtuellen Bedienelemente 81 - 84 sind hier jeweils nicht transparent ausgestaltet, das bedeutet, dass diese virtuellen Bedienelemente mit einer Deckkraft von 100 % dargestellt sind. Bei anderen Ausführungsformen können die virtuellen Bedienelemente, wie oben beschrieben ist, auch transparent vor einem Anzeigekontext dargestellt sein.

In dem in Fig. 4 dargestellten Ausführungsbeispiel sind in die Multifunktionsanzeige- und Bedienvorrichtung ein frequenzmoduliertes Radio (FM-Radio), dem das Bedienelement 81 zugeordnet ist, und ein amplitudenmoduliertes Radio (AM-Radio) integriert, dem das Bedienelement 82 zugeordnet ist. Ein Anschluss der Multifunktionsanzeige- und Bedienvorrichtung ist als Speicherkartenleseschreibgerät ausgebildet, mit dem eine Speicherkarte verbunden ist, der das Bedienelement 84 zugeordnet ist. Die Multifunktionsanzeige- und Bedienvorrichtung umfasst einen weiteren Anschluss, über den ein MP3-Player anschließbar ist. Wird dieser angeschlossen, so tauscht die Steuereinheit der Multifunktionsanzeige- und Bedienvorrichtung mit dem MP3-Player so genannte erste Informationen aus, die den angeschlossenen MP3-Player als solchen identifizieren. Die Ansicht in dem Bedienkontext, in dem die Audioquellen ausgewählt werden können, ändert somit seine Ansicht zu der, die in Fig. 5 dargestellt ist. Zusätzlich zu den Bedienelementen 81, 82 und 84, über die das FM-Radio, das AM-Radio und die Speicherkarte als Audioquellen auswählbar sind, ist ein Bedienelement 83 angezeigt, das der Auswahl des MP3-Players als Audioquelle zugeordnet ist. Die virtuellen Bedienelemente 81 - 84 sind sowohl in Fig. 5 als auch in Fig. 4 jeweils so ausgebildet, dass sie gemeinsam möglichst einen gesamten für eine Anzeige von Bedienelementen zur Verfügung stehenden Bereich, hier den Anzeigekontextbereich 21, der Anzeigefläche 6 ausfüllen. Hierbei sind die einzelnen Bedienelemente vorzugsweise so ausgestaltet, dass sie gleichmäßig verteilt sind. Entlang einer ausgezeichneten Richtung, hier einer Längsseite 58 der Anzeigefläche 6, weisen die Bedienelemente 81 bis 84 jeweils eine identische Ausdehnung auf. Hierdurch wird eine optimale Ausnutzung des zur Verfügung stehenden Darstellungsbereichs erreicht.

Bei einer anderen Ausführungsform kann vorgesehen sein, dass die Darstellungsbereichsgrößen der einzelnen Bedienelemente, die den Bedienoptionen zugeordnet sind, unterschiedliche Größen nach einer Bedienwahrscheinlichkeit gestaffelt aufweisen. Vorteilhafterweise sind die häufig bedienten Bedienelemente größer dargestellt als die selten bedienten. Ferner sind die häufig bedienten Bedienelemente eher in der Mitte der Anzeigefläche als an ihren Rändern dargestellt.

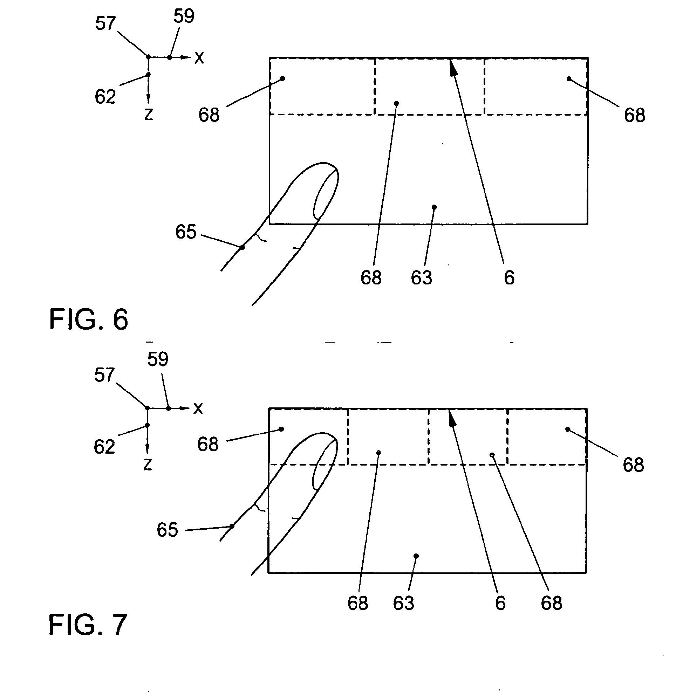

Bei einer Ausführungsform wie der nach Fig. 1, bei der eine berührungslos messende Positionsbestimmungseinheit existiert, ist es vorteilhaft, ein Wechsel aus einem Anzeigekontext, in dem lediglich Informationen über Fahrzeugsysteme, Fahrzeugfunktionen und/oder Dienste angezeigt werden, in einen Bedienmodus, in dem zusätzlich Bedienelemente angezeigt werden, die Bedienoptionen zugeordnet sind, einen räumlich festgelegten Aktivierungsbereich vorzusehen. Geht man davon aus, dass mit der Anzeigefläche eine XY-Ebene eines kartesischen Koordinatensystems 57 verknüpft ist, dessen X-Achse 59 parallel zu der Längsseite 58 verläuft und dessen Y-Achse 61 mit einer kürzeren Längsseite 60 parallel verläuft, so ermöglicht dies eine Orientierung in einer Fig. 6, in der eine Ansicht in der XZ-Ebene dargestellt ist. Die Anzeigefläche 6 erstreckt sich entlang der X-Achse 59 und senkrecht hierzu entlang der Y-Richtung, d.h. aus der Zeichenebene heraus. Vor der Anzeigefläche, d.h. entlang einer Z-Richtung 62, erstreckt sich ein Aktivierungsbereich 63, der vorzugsweise quaderförmig ausgebildet ist und ein gedachter Explosionskörper der Anzeigefläche 6 ist. Der Aktivierungsbereich kann andere Formen annehmen. Tritt ein Betätigungselement 65, welches ein Finger ist, in den Aktivierungsbereich 63 ein, so wird die Benutzerschnittstelle von dem Anzeigemodus in den Bedienmodus umgeschaltet. Benachbart zu den Bedienelementen sind so genannte Betätigungsbereiche 68 definiert. Diese korrespondieren in Fig. 6 mit den Bedienelementen 81, 82 und 84 nach Fig. 4. In Fig. 7 sind entsprechend Betätigungsbereiche korrespondierend mit den Bedienelementen 81-84 dargestellt. Verweilt das Betätigungselement 65 in einem solchen Betätigungsbereich über eine vorgegebene Zeitspanne, so kann hierüber bei einer Ausführungsform die entsprechende Bedienoption aktiviert werden. Alternativ kann die Bedienoption über ein Berühren der Anzeigefläche und somit über die Positionserfassungseinheit ausgelöst werden. Bei anderen Ausführungsformen kann vorgesehen sein, dass keine Betätigungsbereiche vorgesehen sind, sondern eine Auslösung ausschließlich über ein Berühren des Darstellungsbereichs, dem in der Regel ein identisch ausgebildeter Auslösebereich zugeordnet ist, erfolgen kann. Der Auslösebereich kann jedoch in seiner Form und/oder seinen Abmessungen von der Form und/oder der Abmessung des Darstellungsbereichs abweichen, insbesondere größer als der Darstellungsbereich des zugeordneten Bedienelements sein.

### Bezugszeichenliste

- 1: Kraftfahrzeug
- 2: Multifunktionsanzeige- und Bedienvorrichtung
- 3: Fahrzeugsysteme
- 3': Fahrzeugfunktionen
- 3": fahrzeuginterne Dienste
- 3''': fahrzeugexterne Dienste
- 4: Anzeigevorrichtung
- 5: Steuereinheit
- 6: Anzeigefläche
- 7: Speichervorrichtung
- 8: Erfassungseinheit
- 9: berührungsempfindliche Positionserfassungseinheit
- 10: berührungslos messende Positionsbestimmungseinheit
- 11: Bedienelemente
- 12: weitere Bedienelemente
- 13: Schnittstelle
- 14: Datenbus
- 15: weitere Schnittstelle
- 16, 17: Anschlüsse
- 18: Mobiltelefon
- 19: Anschlussüberwachungseinrichtung
- 21: Kontextinformationsbereich
- 22: Statusinformationsbereich
- 23: linker unterer Rand
- 24: rechter unterer Rand
- 25: Quellensymbol
- 26: Dreieck
- 27: Wiedergabezeit
- 28: Kontextkennungsfeld
- 29: Kontextkennung Navigation
- 30: Kontextkennung Audio
- 31: Kontextkennung Fahrzeug
- 32: Kontextkennung Telefon
- 33: Kontextkennung Allgemein
- 34: Uhrzeitangabe
- 35: alphanumerische Angabe
- 36: Interpret
- 37: Titel
- 38: vergangene Abspieldauer
- 39: verbleibende Abspieldauer
- 40: Verlaufsdiagramm
- 41: weitere alphanumerische Angabe
- 51-56: Bedienelemente
- 57: Koordinatensystem
- 58: Längsseite der Anzeigefläche
- 59: X-Achse
- 60: kurze Seite der Anzeigefläche
- 61: Y-Achse
- 62: Z-Achse
- 63: Aktivierungsbereich
- 65: Betätigungselement
- 68: Betätigungsbereich
- 81-84: Bedienelemente

## Patentansprüche

1. Multifunktionsanzeige- und Bedienvorrichtung (2) eines Kraftfahrzeugs (1) zum Anzeigen von Informationen über Fahrzeugsysteme (3), Fahrzeugfunktionen (3') und/oder Dienste (3", 3"') und zum Bedienen der Fahrzeugsysteme (3), Fahrzeugfunktionen (3') und/oder Dienste (3", 3"') umfassend eine Anzeigevorrichtung (4) mit einer Anzeigefläche (6), eine mit der Anzeigevorrichtung (4) verknüpfte Steuereinheit (5) zum Umsetzen einer Benutzerschnittstelle sowie mindestens eine mit der Anzeigevorrichtung (4) gekoppelte Positionserfassungseinheit (9, 10), mit der eine Betätigung durch ein Betätigungselement (65), insbesondere ein Körperteil, vorzugsweise einen Finger, eines Nutzers, in Abhängigkeit von einer ermittelten Position des Betätigungselements relativ zu einer Darstellung auf der Anzeigefläche (6) erfassbar ist,
**dadurch gekennzeichnet, dass**
die Steuereinheit (5) ausgebildet ist, die Benutzerschnittstelle in einem Bedienmodus zu betreiben, in dem abhängig von einem Zustand des Kraftfahrzeugs (1), der Fahrzeugsysteme (3), der Fahrzeugfunktionen (3') und/oder der Dienste (3", 3"') nur bestimmte Bedienoptionen aller möglichen Bedienoptionen zur Verfügung stehen, und die Steuereinheit (5) ausgebildet ist, abhängig von einem Zustand des Kraftfahrzeugs (1), der Fahrzeugsysteme (3), der Fahrzeugfunktionen (3') und/oder der Dienste (3", 3"') diejenigen aktuell zur Verfügung stehenden aller möglichen Bedienoptionen zu ermitteln, und in dem Bedienmodus jeweils nur den ermittelten aktuell verfügbaren Bedienoptionen zugeordnete Bedienelemente (51 - 56; 81 - 84) angezeigt werden, wobei die Darstellung der den verfügbaren Bedienoptionen zugeordneten Bedienelemente (51 - 56; 81 - 84) so erfolgt, dass eine möglichst optimale Betätigungssicherheit für eine Betätigungshandlung mit dem Betätigungselement (65) erreicht wird, wobei
die virtuellen Bedienelemente (51 - 56; 81 - 84) der zur Verfügung stehenden Bedienoptionen so dargestellt sind, dass diese jeweils über einen gesamten für Bedienelemente (51 - 56; 81 - 84) zur Verfügung stehenden Bereich der Anzeigefläche (6) gleichmäßig verteilt angeordnet sind, oder die virtuellen Bedienelemente (51 - 56; 81 - 84) der zur Verfügung stehenden Bedienoptionen in dem einen Bedienmodus jeweils so dargestellt sind, dass sie entlang einer ausgezeichneten Richtung, insbesondere parallel zu einer Längsseite (58) der Anzeigefläche (6), eine gleiche Ausdehnung aufweisen.

2. Multifunktionsanzeige- und Bedienvorrichtung (2) nach Anspruch 1, **dadurch gekennzeichnet, dass** die virtuellen Bedienelemente (51 - 56; 81 - 84) der zur Verfügung stehenden Bedienoptionen in dem einen Bedienmodus jeweils so dargestellt sind, dass ihnen flächig jeweils ein gleich großer Teilbereich des gesamten für Bedienelemente (51 - 56; 81 - 84) zur Verfügung stehenden Bereichs (21) der Anzeigefläche (6) zugewiesen ist.

3. Multifunktionsanzeige- und Bedienvorrichtung (2) nach einem der genannten Ansprüche, **dadurch gekennzeichnet, dass** die virtuellen Bedienelemente (51 - 56; 81 - 84) der zur Verfügung stehenden Bedienoptionen in dem einen Bedienmodus jeweils so dargestellt sind, dass eine Summe ihrer Darstellungsflächen mindestens 75%, vorzugsweise 90%, am bevorzugtesten 100% des gesamten für Bedienelemente (51 - 56; 81 - 84) zur Verfügung stehenden Bereichs (21) überdecken.

4. Multifunktionsanzeige- und Bedienvorrichtung (2) nach einem der genannten Ansprüche, **dadurch gekennzeichnet, dass** die Darstellungspositionen und/oder Darstellungsgrößen und/oder Auslösebereichsgrößen und/oder Betätigungsbereichsgrößen der den zur Verfügung stehenden Bedienoptionen zugeordneten virtuellen Bedienelemente und/oder Auslösebereiche und/oder Betätigungsbereiche in dem einen Bedienmodus in Abhängigkeit von der Anzahl der im jeweiligen Bedienkontext zur Verfügung stehenden Bedienoptionen angepasst sind.

5. Multifunktionsanzeige- und Bedienvorrichtung (2) nach einem der genannten Ansprüche, **dadurch gekennzeichnet, dass** Anschlüsse für mit dem Kraftfahrzeug (1) lösbar koppelbare Geräte vorgesehen sind, die mit einer Anschlussbelegungsüberwachung ausgestattet sind.

6. Multifunktionsanzeige- und Bedienvorrichtung (2) nach einem der genannten Ansprüche, **dadurch gekennzeichnet, dass** die Positionserfassungseinheit (9) mit der Anzeigefläche (6) der Anzeigevorrichtung (4) als Touchscreen ausgebildet ist.

7. Multifunktionsanzeige- und Bedienvorrichtung (2) nach einem der genannten Ansprüche, **dadurch gekennzeichnet, dass** die Positionserfassungseinheit (10) eine berührungslos wirkende Erfassungseinheit ist, mit der eine Position des Betätigungselements (65) im Raum vor der Anzeigefläche (6) ermittelbar ist.

8. Verfahren zum Betreiben einer Multifunktionsanzeige- und Bedienvorrichtung (2) eines Kraftfahrzeugs (1) umfassend die Schritte Anzeigen von Informationen über Fahrzeugsysteme (3), Fahrzeugfunktionen (3') und/oder Dienste (3", 3"') auf einer Anzeigefläche (6) einer Anzeigevorrichtung (4); Erfassen einer Position eines Betätigungselements (65), insbesondere eines Körperteils, vorzugsweise eines Fingers eines Nutzers, relativ zu den angezeigten Informationen, und Erzeugen mindestens eines Bediensignals, das der erfassten Position zugeordnet ist, zum Bedienen der Fahrzeugsysteme (3), Fahrzeugfunktionen (3') und/oder Dienste (3", 3"'),
**dadurch gekennzeichnet, dass**
die Multifunktionsanzeige- und Bedienvorrichtung (2) in einem Bedienmodus betrieben wird, in dem abhängig von einem Zustand des Kraftfahrzeugs (1), der Fahrzeugsysteme (3), der Fahrzeugfunktionen (3') und/oder der Dienste (3", 3"') nur bestimmte Bedienoptionen aller möglichen Bedienoptionen zur Verfügung stehen und die aktuell zur Verfügung stehenden Bedienoptionen aller Bedienoptionen ermittelt werden und jeweils nur die aktuell ermittelten zur Verfügung stehenden Bedienoptionen aller möglichen Bedienoptionen mittels virtueller Bedienelemente (51 - 56; 81 - 84) angezeigt werden, wobei die Darstellung der Informationen so erfolgt, dass eine möglichst optimale Betätigungssicherheit für eine Betätigungshandlung mit dem Betätigungselement (65) erreicht wird, wobei die zur Verfügung stehenden Bedienoptionen mittels virtueller Bedienelemente (51 - 56; 81 - 84) dargestellt werden, die jeweils über einen gesamten für Bedienelemente (51 - 56; 81 - 84) zur Verfügung stehenden Bereich der Anzeigefläche (6) gleichmäßig verteilt angeordnet sind, oder die virtuellen Bedienelemente (51 - 56; 81 - 84) der zur Verfügung stehenden Bedienoptionen in dem einen Bedienmodus jeweils so dargestellt werden, dass sie entlang einer ausgezeichneten Richtung, insbesondere parallel zu einer Längsseite (58) der Anzeigefläche (6), eine gleiche Ausdehnung aufweisen.

9. Verfahren nach Anspruch 8, **dadurch gekennzeichnet, dass** die virtuellen Bedienelemente (51 - 56; 81 - 84) der zur Verfügung stehenden Bedienoptionen in dem einen Bedienmodus jeweils so dargestellt werden, dass ihnen flächig jeweils ein gleich großer Teilbereich des gesamten für Bedienelemente (51 - 56; 81 - 84) zur Verfügung stehenden Bereichs der Anzeigefläche (6) zugewiesen wird.

10. Verfahren nach einem der Ansprüche 8 oder 9, **dadurch gekennzeichnet, dass** die virtuellen Bedienelemente (51 - 56; 81 - 84) der zur Verfügung stehenden Bedienoptionen in dem einen Bedienmodus jeweils so dargestellt werden, dass eine Summe ihrer Darstellungsflächen mindestens 75%, vorzugsweise 90%, am bevorzugtesten 100% des gesamten für Bedienelemente (51 - 56; 81 - 84) zur Verfügung stehenden Bereichs überdecken.

11. Verfahren nach einem der Ansprüche 8 bis 10, **dadurch gekennzeichnet, dass** die Darstellungspositionen und/oder Darstellungsgrößen und/oder Auslösebereichsgrößen und/oder Betätigungsbereichsgrößen der den zur Verfügung stehenden Bedienoptionen zugeordneten virtuellen Bedienelemente und/oder Auslösebereiche und/oder Betätigungsbereiche in dem einen Bedienmodus in Abhängigkeit von der Anzahl der im jeweiligen Bedienkontext zur Verfügung stehenden Bedienoptionen angepasst werden.

12. Verfahren nach einem der Ansprüche 8 bis 11, **dadurch gekennzeichnet, dass** für mit dem Kraftfahrzeug (1) lösbar koppelbare Geräte vorgesehene Anschlüsse hinsichtlich einer Belegung überwacht werden.

13. Verfahren nach einem der Ansprüche 8 bis 12, **dadurch gekennzeichnet, dass** zur Überwachung der Belegung Statusinformationen mit einem der koppelbaren Geräte ausgetauscht werden, die mindestens eine Bedienoption bei der Darstellung in dem Bedienmodus beeinflussen, insbesondere, indem diese ausgetauschten Statusinformationen zumindest teilweise dargestellt werden.

14. Verfahren nach einem der Ansprüche 8 bis 13, **dadurch gekennzeichnet, dass** mittels der Positionserfassungseinheit (9) eine Berührposition auf der Anzeigefläche (6) der Anzeigevorrichtung (4), die als Touchscreen ausgebildet ist, erfasst wird und ein Bediensignal erzeugt wird, sofern die ermittelte Position in einem einer Bedienoption zugeordneten Auslösebereich liegt.

15. Verfahren nach einem der Ansprüche 8 bis 14, **dadurch gekennzeichnet, dass** mittels der Positionserfassungseinheit (10) eine Position des Betätigungselements (65) im Raum vor der Anzeigefläche (6) der Anzeigevorrichtung (4) berührungslos ermittelt wird und ein einer Bedienoption zugeordnetes Bediensignal erzeugt wird, sofern die ermittelte Position in einem der Bedienoption zugeordneten Betätigungsbereich für eine vorgegebene Zeitspanne liegt.

## Claims

1. Multifunction display and control apparatus (2) for a motor vehicle (1), in order to display information about vehicle systems (3), vehicle functions (3') and/or services (3" , 3"'), and in order to control the vehicle systems (3), vehicle functions (3') and/or services (3", 3"'), comprising a display apparatus (4) having a display area (6), a control unit (5), which is linked to the display apparatus (4), in order to provide a user interface, as well as at least one position detection unit (9, 10), which is coupled to the display apparatus (4), by means of which operation can be detected by an operating element (65), in particular a body part, preferably a finger, of a user, as a function of a determined position of the operating element relative to a display on the display area (6),
**characterized in that**
the control unit (5) is designed to operate the user interface in an operating mode in which only specific control options from all possible control options are available, depending on a state of the motor vehicle (1), of the vehicle systems (3), of the vehicle functions (3') and/or of the services (3", 3"'), and the control unit (5) is designed to determine those control options from all the possible control options which are currently available, depending on a state of the motor vehicle (1), of the vehicle systems (3), of the vehicle functions (3') and/or of the services (3", 3"'), and only control elements (51-56; 81-84) which are associated with the determined currently available control options are in each case displayed in the operating mode, wherein the operating elements (51-56; 81-84) associated with the available control options are displayed so as to achieve as optimum as possible an operating reliability for an operating action by the operating element (65), wherein the virtual control elements (51-56; 81-84) of the available control options are displayed such that they are each arranged distributed uniformly over a total area of the display area (6) which is available for control elements (51-56; 81-84), or the virtual control elements (51-56; 81-84) of the available control options are displayed in said one operating mode in each case such that they have the same extent along a specific direction, in particular parallel to a longitudinal side (58) of the display area (6).

2. Multifunction display and control apparatus (2) according to Claim 1, **characterized in that** the virtual control elements (51-56; 81-84) of the available control options are each displayed in said one operating mode such that each of them is assigned in terms of area a subarea, of the same size, of the total area (21) of the display area (6) which is available for control elements (51-56; 81-84).

3. Multifunction display and control apparatus (2) according to one of said claims, **characterized in that** the virtual control elements (51-56; 81-84) of the available control options are each displayed in said one operating mode such that a total of their display areas covers at least 75%, preferably 90%, and most preferably 100% of the total area (21) available for control elements (51-56; 81-84).

4. Multifunction display and control apparatus (2) according to one of said claims, **characterized in that** the display positions and/or display sizes and/or initiation area sizes and/or operating area sizes of the virtual control elements associated with the available control options and/or initiation areas and/or operating areas in said one operating mode are adapted as a function of the number of control options available in the respective control context.

5. Multifunction display and control apparatus (2) according to one of said claims, **characterized in that** connections are provided for appliances which can be detachably coupled to the motor vehicle (1) and are equipped with connection occupancy monitoring.

6. Multifunction display and control apparatus (2) according to one of said claims, **characterized in that** the position detection unit (9) is designed with the display area (6) of the display apparatus (4) as a touchscreen.

7. Multifunction display and control apparatus (2) according to one of said claims, **characterized in that** the position detection unit (10) is a contactlessly operating detection unit by means of which a position of the operating element (65) can be determined in the space in front of the display area (6).

8. Method for operating a multifunction display and control apparatus (2) in a motor vehicle (1) comprising the following steps:
display of information relating to vehicle systems (3), vehicle functions (3') and/or services (3", 3"') on a display area (6) of a display apparatus (4);
detection of a position of an operating element (65), in particular of a body part, preferably of a finger of a user, relative to the displayed information, and production of at least one control signal, which is associated with the detected position, for controlling the vehicle systems (3), vehicle functions (3') and/or services (3", 3"'),
**characterized in that**
the multifunction display and control apparatus (2) is operated in an operating mode in which only specific control options of all the possible control options are available depending on a state of the motor vehicle (1), of the vehicle systems (3), of the vehicle functions (3') and/or of the services (3", 3"'), and the currently available control options of all the control options are determined, and in each case only the currently determined available control options of all the possible control options are displayed by means of virtual control elements (51-56; 81-84) wherein the information is displayed so as to achieve as optimum an operating reliability as possible for an operating action with the operating element (65), wherein the available control options are displayed by means of virtual control elements (51-56; 81-84), which are each arranged distributed uniformly over an entire area of the display area (6) which is available for control elements (51-56; 81-84), or the virtual control elements (51-56; 81-84) of the available control options are each displayed in said one operating mode such that they have the same extent along a specific direction, in particular parallel to a longitudinal side (58) of the display area (6).

9. Method according to Claim 8, **characterized in that** the virtual control elements (51-56; 81-84) for the available control options are each displayed in said one operating mode such that each of them is assigned in terms of area a subarea, of the same size, of the total area of the display area (6) which is available for control elements (51-56; 81-84).

10. Method according to one of Claims 8 or 9, **characterized in that** the virtual control elements (51-56; 81-84) of the available control options are each displayed in said one operating mode such that a total of their display areas covers at least 75%, preferably 90%, and most preferably 100% of the total area available for control elements (51-56; 81-84).

11. Method according to one of Claims 8 to 10, **characterized in that** the display positions and/or display sizes and/or initiation area sizes and/or operating area sizes of the virtual control elements associated with the available control options and/or initiation areas and/or operating areas in said one operating mode are adapted as a function of the number of control options available in the respective control context.

12. Method according to one of claims 8 to 11, **characterized in that** the occupancy of connections which are provided for appliances which can be detachably coupled to the motor vehicle (1) is monitored.

13. Method according to one of Claims 8 to 12, **characterized in that**, in order to monitor the occupancy, status information is interchanged with one of the appliances which can be coupled, which status information influences at least one control option for the display in the operating mode, in particular by displaying at least some of this interchanged status information.

14. Method according to one of Claims 8 to 13, **characterized in that** a touch position on the display area (6) of the display apparatus (4), which is in the form of a touchscreen, is detected by means of the position detection unit (9), and a control signal is produced if the determined position is in an initiating area associated with a control option.

15. Method according to one of Claims 8 to 14, **characterized in that** a position of the operating element (65) in the space in front of the display area (6) of the display apparatus (4) is determined contactlessly by means of the position detection unit (10), and a control signal which is associated with a control option is produced if the determined position is in an operating area associated with the control option, for a predetermined time period.

## Revendications

1. Dispositif d'affichage multifonctions et de commande (2) d'un véhicule (1) pour l'affichage d'informations sur des systèmes de véhicule (3), des fonctions de véhicule (3') et/ou des services (3", 3"') et pour la commande des systèmes de véhicule (3), des fonctions de véhicule (3') et/ou des services (3", 3"') comprenant un dispositif d'affichage (4) avec une surface d'affichage (6), une unité de commande (5) associée au dispositif d'affichage (4) pour la mise en oeuvre d'une interface utilisateur et au moins une unité de détection de position (9, 10) couplée au dispositif d'affichage (4) avec laquelle un actionnement par un élément d'actionnement (65), en particulier une partie du corps, de préférence un doigt, d'un utilisateur, peut être détecté en fonction d'une position déterminée de l'élément d'actionnement par rapport à une représentation sur la surface d'affichage (6),
**caractérisé en ce que**
l'unité de commande (5) est conçue pour exploiter l'interface utilisateur dans un mode de commande dans lequel seules certaines options de commande parmi toutes les options de commande possibles sont mises à disposition en fonction d'un état du véhicule (1), des systèmes de véhicule (3), des fonctions de véhicule (3') et/ou des services (3", 3"') et l'unité de commande (5) est conçue pour déterminer les options de commande mises à disposition actuellement parmi toutes les options de commande possibles en fonction d'un état du véhicule (1), des systèmes de véhicule (3), des fonctions de véhicule (3') et/ou des services (3", 3"') et à chaque fois seuls des éléments de commande (51 - 56 ; 81 - 84) attribués aux options de commande disponibles actuellement et déterminées sont affichés dans le mode de commande, la représentation des éléments de commande (51 - 56 ; 81 - 84) attribués aux options de commande disponibles s'effectuant de telle sorte qu'une sécurité d'actionnement la plus optimale possible soit obtenue pour un acte d'actionnement avec l'élément d'actionnement (65),
les éléments de commande (51 - 56 ; 81 - 84) virtuels des options de commande mises à disposition étant représentés de telle sorte que ces éléments soient disposés avec une répartition uniforme au moyen d'une zone globale, mise à disposition pour des éléments de commande (51 - 56 ; 81 - 84), de la surface d'affichage (6), ou bien les éléments de commande (51 - 56 ; 81 - 84) virtuels des options de commande mises à disposition étant représentés dans ledit mode de commande à chaque fois de telle sorte qu'ils présentent une extension identique le long d'une direction définie, en particulier parallèlement à un côté longitudinal (58) de la surface d'affichage (6).

2. Dispositif d'affichage multifonctions et de commande (2) selon la revendication 1, **caractérisé en ce que** les éléments de commande (51 - 56 ; 81 - 84) virtuels des options de commande mises à disposition sont représentés dans ledit mode de commande à chaque fois, de telle sorte qu'une zone partielle de grandeur identique de l'ensemble de la zone (21), mise à disposition pour des éléments de commande (51 - 56 ; 81 - 84), de la surface d'affichage (6) leur est attribuée en deux dimensions.

3. Dispositif d'affichage multifonctions et de commande (2) selon l'une quelconque des revendications citées, **caractérisé en ce que** les éléments de commande (51 - 56 ; 81 - 84) virtuels des options de commande mises à disposition sont représentés dans ledit mode de commande à chaque fois de telle sorte qu'une somme de leurs surfaces de représentation couvre au moins 75%, de préférence 90%, préférentiellement 100% de l'ensemble de la zone mise à disposition (21) pour des éléments de commande (51 - 56 ; 81 - 84).

4. Dispositif d'affichage multifonctions et de commande (2) selon l'une quelconque des revendications citées, **caractérisé en ce que** les positions de représentation et/ou grandeurs de représentation et/ou grandeurs de zone de déclenchement et/ou grandeurs de zone d'actionnement des éléments de commande virtuels attribués aux options de commande mises à disposition et/ou des zones de déclenchement et/ou des zones d'actionnement sont adaptées dans ledit mode de commande en fonction du nombre des options de commande mises à disposition dans le contexte de commande respectif.

5. Dispositif d'affichage multifonctions et de commande (2) selon l'une quelconque des revendications citées, **caractérisé en ce que** des branchements sont prévus pour des appareils pouvant être couplés de façon amovible avec le véhicule (1) qui sont équipés d'un contrôle d'affectation de branchement.

6. Dispositif d'affichage multifonctions et de commande (2) selon l'une quelconque des revendications citées, **caractérisé en ce que** l'unité de détection de position (9) est conçue avec la surface d'affichage (6) du dispositif d'affichage (4) sous forme d'écran tactile.

7. Dispositif d'affichage multifonctions et de commande (2) selon l'une quelconque des revendications citées, **caractérisé en ce que** l'unité de détection de position (10) est une unité de détection agissant sans contact qui permet de déterminer une position de l'élément d'actionnement (65) dans l'espace situé devant la surface d'affichage (6).

8. Procédé pour exploiter un dispositif d'affichage multifonctions et de commande (2) d'un véhicule (1) comprenant les étapes suivantes :
affichage d'informations sur des systèmes de véhicule (3), des fonctions de véhicule (3') et/ou des services (3", 3"') sur une surface d'affichage (6) d'un dispositif d'affichage (4) ;
détection d'une position d'un élément d'actionnement (65), en particulier d'une partie du corps, de préférence d'un doigt d'un utilisateur, par rapport aux informations affichées, et génération d'au moins un signal de commande, qui est attribué à la position détectée, pour la commande des systèmes de véhicule (3), des fonctions de véhicule (3') et/ou des services (3",3"'),
**caractérisé en ce que**
le dispositif d'affichage multifonctions et de commande (2) est exploité dans un mode de commande dans lequel seules certaines options de commande parmi toutes les options de commande possibles sont mises à disposition en fonction d'un état du véhicule (1), des systèmes de véhicule (3), des fonctions de véhicule (3') et/ou des services (3", 3"') et les options de commande mises à disposition actuellement parmi toutes les options de commande sont déterminées et à chaque fois seules les options de commande, déterminées actuellement et mises à disposition, parmi toutes les options de commande possibles sont affichées au moyen d'éléments de commande (51 - 56 ; 81-84) virtuels, la représentation des informations s'effectuant de telle sorte qu'une sécurité d'actionnement la plus optimale possible soit obtenue pour un acte d'actionnement avec l'élément d'actionnement (65), les options de commande mises à disposition étant représentées au moyen d'éléments de commande (51 - 56 ; 81 - 84) virtuels, lesquels sont disposés avec une répartition uniforme à chaque fois sur une zone globale, mise à disposition pour des éléments de commande (51 - 56 ; 81 - 84), de la surface d'affichage (6), ou bien les éléments de commande (51 - 56 ; 81 - 84) virtuels des options de commande mises à disposition étant représentés dans ledit mode de commande à chaque fois de telle sorte qu'ils présentent une extension identique le long d'une direction définie, en particulier parallèlement à un côté longitudinal (58) de la surface d'affichage (6).

9. Procédé selon la revendication 8, **caractérisé en ce que** les éléments de commande (51 - 56 ; 81 - 84) virtuels des options de commande mises à disposition sont représentés dans ledit mode de commande à chaque fois de telle sorte qu'une zone partielle de grandeur identique de l'ensemble de la zone, mise à disposition pour des éléments de commande (51 - 56 ; 81 - 84), de la surface d'affichage (6) leur est attribuée en deux dimensions.

10. Procédé selon l'une quelconque des revendications 8 ou 9, **caractérisé en ce que** les éléments de commande (51 - 56 ; 81 - 84) virtuels des options de commande mises à disposition sont représentés dans ledit mode de commande à chaque fois de telle qu'une somme de leurs surfaces de représentation couvre au moins 75%, de préférence 90%, préférentiellement 100% de l'ensemble de la zone mise à disposition pour des éléments de commande (51 - 56 ; 81 - 84).

11. Procédé selon l'une quelconque des revendications 8 à 10, **caractérisé en ce que** les positions de représentation et/ou grandeurs de représentation et/ou grandeurs de zone de déclenchement et/ou grandeurs de zone d'actionnement des éléments de commande virtuels attribués aux options de commande mises à disposition et/ou des zones de déclenchement et/ou des zones d'actionnement dans ledit mode de commande sont adaptées en fonction du nombre des options de commande mises à disposition dans le contexte de commande respectif.

12. Procédé selon l'une quelconque des revendications 8 à 11, **caractérisé en ce que** des branchements prévus pour des appareils pouvant être couplés de façon amovible avec le véhicule (1) sont surveillés en ce qui concerne une affectation.

13. Procédé selon l'une quelconque des revendications 8 à 12, **caractérisé en ce que**, pour surveiller l'affectation, des informations d'état sont échangées avec l'un des appareils pouvant être couplés, qui influencent au moins une option de commande lors de la représentation dans le mode de commande, en particulier du fait que ces informations d'état échangées sont représentées au moins partiellement.

14. Procédé selon l'une quelconque des revendications 8 à 13, **caractérisé en ce qu'**une position de contact sur la surface d'affichage (6) du dispositif d'affichage (4), qui est conçu comme écran tactile, est détectée au moyen de l'unité de détection de position (9) et un signal de commande est généré dans la mesure où la position déterminée se situe dans une zone de déclenchement attribuée à une option de commande.

15. Procédé selon l'une quelconque des revendications 8 à 14, **caractérisé en ce qu'**une position de l'élément d'actionnement (65) dans l'espace situé devant la surface d'affichage (6) du dispositif d'affichage (4) est déterminée sans contact au moyen du dispositif de détection de position (10) et un signal de commande attribué à une option de commande est généré dans la mesure où la position déterminée se situe dans une zone d'actionnement attribuée à l'option de commande pour un laps de temps prédéfini.
